**Europäisches Patentamt**

**European Patent Office**

**Office européen des brevets**

(11) Veröffentlichungsnummer: **0 058 741**
A1

# (12) EUROPÄISCHE PATENTANMELDUNG

(21) Anmeldenummer: 81106401.3

(22) Anmeldetag: 18.08.81

(51) Int. Cl.³: **G 05 D 16/20, F 16 K 31/06**

(30) Priorität: 25.02.81 DE 3106965

(43) Veröffentlichungstag der Anmeldung: 01.09.82
**Patentblatt 82/35**

(84) Benannte Vertragsstaaten: **AT BE DE FR GB IT NL**

(71) Anmelder: **G. Kromschröder Aktiengesellschaft,
Jahnplatz 6, D-4500 Osnabrück (DE)**

(72) Erfinder: **Bertke, Heinrich, Ing. grad., Sternstrasse 13,
D-4512 Wallenhorst 1 (DE)**
Erfinder: **Schlingmeyer, Günter, Ringstrasse 43,
D-4513 Belm (DE)**
Erfinder: **Kötter, Herbert, Wellenesch 2, D-4531 Lotte
(DE)**

(74) Vertreter: **Wolgast, Rudolf, Dipl.-Chem. Dr. et al,
Dipl.-Phys. Jürgen Weisse Dipl.Chem. Dr. Rudolf Wolgast
Bökenbusch 41 Postfach 11 03 86,
D-5620 Velbert 11 Langenberg (DE)**

(54) **Kombinationsventil.**

(57) Bei einem wahlweise absperrenden oder druckregeln-den Kombinationsventil wirken auf einen Ventilschließkör-per (26) auf gegenüberliegenden Seiten einerseits eine Ma-gnetspule (30) mit Magnetanker (34) sowie eine Schließ-feder (28) und anderseits Druckreglermeßwerk (36) mit ei-ner Belastungsfeder (42). Das Druckreglermeßwerk (36) hat eine Membrankammer (40), die mit einer auslaßseitigen Kammer (20) eines Ventilgehäuses (10) in Verbindung steht und durch eine Reglermembran (38) abgeschlossen ist. Die Membrankammer (40) steht über eine stark gedrosselte Verbindung (52, 54, 56) mit einer einlaßseitigen Kammer (18) in Verbindung. Der Magnetanker (34) beherrscht eine weniger stark gedrosselte Verbindung (46) zwischen der Kammer (20) und der Membrankammer (40). Diese Verbin-dung ist bei nichterregter Magnetspule (32) abgesperrt und bei erregter Magnetspule (32) freigegeben. Dadurch ist der Ventilschließkörper (26) in der Schließstellung von der Kraft der Belastungsfeder (42) des Druckreglermeßwerks entla-stet.

ACTORUM AG

Patentanmeldung

G. Kromschröder Aktiengesellschaft, 4500 Osnabrück

Kombinationsventil

Die Erfindung betrifft ein Kombinationsventil, welches aus einem Druckregler und einem Magnetventil besteht, enthaltend ein Ventilgehäuse mit einem Einlaß und einem Auslaß, das durch eine Trennwand in eine einlaßseitige und eine auslaßseitige Kammer unterteilt ist, wobei in der Trennwand ein Ventildurchgang mit einem Ventilsitz gebildet ist, einen mit dem Ventilsitz zusammenwirkenden Ventilschließkörper, der durch eine Schließfeder in Schließrichtung belastet ist, eine zu dem Ventilsitz gleichachsige Magnetspule und einen auf den Ventilschließkörper einwirkenden Magnetanker, ein Druckreglermeßwerk mit einer mit dem Ventilschließkörper verbundenen Reglermembran, einer an die Reglermembran angrenzenden Membrankammer, die mit der ausßlaßseitigen Kammer in Verbindung steht, und einer in Öffnungsrichtung des Ventilschließkörpers dem auf die Reglermembran wirkenden Druck entgegenwirkenden Belastungsfeder.

Solche Kombinationsventile sind sehr kompakte Einrichtungen, die einerseits den Gasdruck regeln und andererseits über das Magnetventil ein Absperren der Gaszufuhr gestatten.

Es sind solche Kombinationsventile bekannt, bei denen der Magnetantrieb des Magnetventils und das Druckreglermeßwerk auf einen gemeinsamen Ventilschließkörper wirken (US-PS 2 842 146, US-PS 3 556 117). Dabei wirkt eine Schließfeder auf den Ventilschließkörper und drückt diesen auf den Ventilsitz. In öffnender Richtung wirkt auf den Ventilsitz die Belastungsfeder des Druckreglermeßwerks, welcher der auf die Reglermembran wirkende Ausgangsdruck des Druckreglers entgegenwirkt. Die Schließfeder muß so bemessen sein, daß sie die Belastungsfeder des Druckreglermeßwerks überwindet, wenn die Magnetspule des Magnetventils stromlos ist, und den Ventilschließkörper auf seinen Ventilsitz drückt. Wenn ein relativ hoher Ausgangsgasdruck verlangt wird, muß die Schließfeder entsprechend stark vorgespannt sein, um ein sicheres Schließen zu gewährleisten. Der Kraftüberschuß der Schließfeder über die Belastungsfeder des Druckreglermeßwerks muß so groß sein, daß das Ventil auch gegen einen erhöhten Vordruck sicher in Schließstellung gehalten wird. Die so stark bemessene Schließfeder muß andererseits von dem Magnetantrieb, also der Magnetspule und dem Magnetanker,überwunden werden. Das erfordert eine unerwünscht hohe Leistung des Magnetventils, die in der Praxis außerdem zu unerwünscht großen Abmessungen führt.

Um diese Probleme zu vermeiden, ist ein Kombinationsventil bekannt (DE-OS 26 01 055), welches zwei gleichachsig angeordnete Ventilschließkörper aufweist, von denen der eine mit der Membran des Druckreglermeßwerks verbunden ist, während der andere am Magnetanker des Magnetventils sitzt. Auf den letzteren Ventilschließkörper wirkt eine Schließfeder. Die Belastungsfeder des Druckreglermeßwerks ist eine Zugfeder, die zwischen dem Magnetanker und dem mit der Reglermembran verbundenen Ventilschließkörper gespannt ist. In der Schließstellung des Magnetventils ist diese Zugfeder praktisch entspannt. Die Ventilschließfeder, die das Magnetventil in Schließstellung hält, braucht daher nicht die Kraft der Belastungsfeder zusätzlich zu überwinden.

Eine solche Anordnung benötigt zwei Ventilschließkörper. Die Belastungsfeder ist als Zugfeder ausgebildet und schwer zugänglich, so daß der Sollwert des Druckreglers praktisch nicht einstellbar ist. Außerdem ist zwar in der Schließstellung des Magnetventils, also bei stromloser Magnetwicklung, der Ventilschließkörper des Magnetventils von der Kraft der Belastungsfeder entlastet, so daß in dieser Stellung die Schließfeder nicht zusätzlich die Belastungsfeder zu überwinden braucht. Wenn jedoch das Magnetventil geöffnet wird, dann muß zusätzlich zu der Schließfeder die Belastungsfeder auf den für die Druckreglung erforderliche Zugspannung gespannt werden. Der Magnetantrieb des Magnetventils muß also sowohl die Schließfeder als auch die Belastungsfeder überwinden.

Der Erfindung liegt die Aufgabe zugrunde, ein Kombinationsventil der eingangs definierten Art so auszubilden, daß einerseits nur ein einziger, von dem Magnetantrieb wie von dem Druckreglermeßwerk betätigbarer Ventilschließkörper vorhanden ist, dieser Ventilschließkörper jedoch in der Schließstellung von der Kraft der Belastungsfeder des Druckreglermeßwerks entlastet ist, so daß die Schließfeder entsprechend schwächer ausgebildet werden kann, und der Magnetantrieb beim Öffnen des Magnetventils nur die Schließfeder zu überwinden aber nicht die Belastungsfeder zu spannen braucht.

4

0058741

Erfindungsgemäß wird diese Aufgabe dadurch gelöst, daß

(a) die Membrankammer über eine stark gedrosselte Verbindung mit der einlaßseitigen Kammer in Verbindung steht und

(b) der Magnetanker eine wesentlich weniger stark gedrosselte Verbindung zwischen der austrittseitigen Kammer und der Membrankammer beherrscht, die bei nicht-erregter Magnetspule abgesperrt und bei erregter Magnetspule freigegeben ist.

Bei geschlossenem Magnetventil steht die Membrankammer über die stark gedrosselte Verbindung mit der einlaßseitigen Kammer in Verbindung. In der Membrankammer baut sich daher statisch der Vordruck auf. Dieser Vordruck überwindet die Belastungsfeder. Er wirkt im gleichen Sinne wie die Schließfeder. Die Schließfeder hält daher den Ventilschließkörper unbeeinflußt von der Vorspannung der Belastungsfeder sicher in Anlage an dem Ventilsitz, wobei die Spannung der Schließfeder nur der erforderlichen Schließkraft zu entsprechen braucht und nicht zusätzlich die Belastungsfeder überwinden muß. Die Schließfeder wird beim Öffnen des Magnetventils, also bei Erregen der Magnetwicklung, von dem Magnetantrieb überwunden. Dabei wird durch den Magnetanker eine wesentlich weniger stark gedrosselte Verbindung zwischen der austrittseitigen Kammer und der Membrankammer hergestellt. Dadurch ist die Membrankammer jetzt mit dem Ausgangsdruck beaufschlagt. Der Ventilschließkörper hebt unter dem Einfluß der Belastungsfeder und des sich zur austrittseitigen Kammer hin ausgleichenden Drucks in der Membrankammer von seinem Ventilsitz ab, so lange, bis der Ausgangsdruck in der austrittseitigen Kammer an der Reglermembran der Vorspannung der Belastungsfeder die Waage hält. Wird die Magnetspule stromlos, so sperrt der Magnetanker diese weniger stark gedrosselte Verbindung zur austrittseitigen Kammer ab. Über die stark gedrosselte Verbindung baut sich in der Membrankammer wieder der Vordruck auf, der die Belastungsfeder überwindet und den Ventilschließkörper von deren Vorspannung entlastet. Dadurch wird der Ventilschließkörper durch die Schließfeder wieder auf den Ventilsitz gedrückt.

Weitere Ausgestaltungen der Erfindung sind Gegenstand der Unteransprüche.

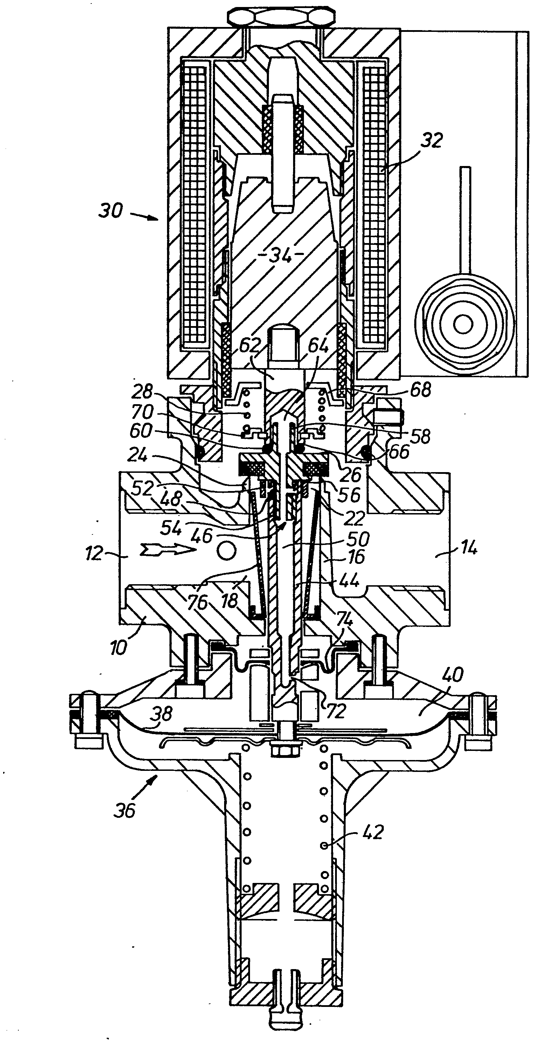

Ein Ausführungsbeispiel der Erfindung ist in der Zeichnung im Längsschnitt schematisch dargestellt und im folgenden beschrieben:

Das Kombinationsventil enthält ein Ventilgehäuse 10 mit einem Einlaß 12 und einem Auslaß 14. Das Ventilgehäuse 10 ist durch eine Trennwand 16 in eine einlaßseitige Kammer 18 und eine auslaßseitige Kammer 20 unterteilt. In der Trennwand 16 ist ein Ventildurchgang 22 mit einem Ventilsitz 24 gebildet. Mit dem Ventilsitz 24 wirkt ein Ventilschließkörper 26 zusammen, der durch eine Schließfeder 28 in Schließrichtung belastet ist. Auf den Ventilschließkörper wirkt einmal ein Magnetantrieb 30 mit einer zu dem Ventilsitz 24 gleichachsigen Magnetspule 32 und einem auf den Ventilschließkörper 26 einwirkenden Magnetanker 34.

Auf den Ventilschließkörper wirkt weiterhin ein Druckreglermeßwerk 36 mit einer mit dem Ventilschließkörper 26 verbundenen Reglermembran 38, einer an die Reglermembran angrenzenden Membrankammer 40, die mit der auslaßseitigen Kammer 20 in Verbindung steht, und einer in Öffnungsrichtung des Ventilschließkörpers 26 dem auf die Reglermembran 38 wirkenden Druck entgegenwirkenden Belastungsfeder 42.

Im einzelnen sind die Magnetspule 32 und das Druckreglermeßwerk 36 gleichachsig zueinander und zu dem Ventilsitz 24 auf gegenüberliegenden Seiten des Ventilgehäuses 10 angeordnet. Der Ventilschließkörper 26 sitzt stromab von dem Ventilsitz 24 zwischen diesem und der Magnetspule 32. Er ist über einen sich durch den Ventildurchgang 22 und die einlaßseitige Kammer 18 sowie die Membrankammer 40 erstreckenden Ventilstößel 44 mit der Reglermembran 38 verbunden. Durch den Ventilschließkörper 26 und den Ventilstößel 44 verläuft ein Kanal 46, über den die weniger stark gedrosselte Verbindung zwischen austrittseitiger Kammer 20 und Membrankammer 40 hergestellt ist. Der Magnetanker 34 liegt bei nicht-erregter Magnetspule 32 unter dem Einfluß der Schließfeder 28 kraftschlüssig und abdichtend an dem Ventilschließkörper 26 an und sperrt dabei den Kanal 46 ab. Der Ventilschließkörper 26 weist auf der dem Magnetanker 32 abgewandten Seite einen den Kanal 46 umgebenden Kragen 48 auf. Der Ventilstößel 44, der mit einer den Kanal 46 bildenden Längsbohrung 50 versehen ist, ist mit dieser Längsbohrung 50 teleskopartig auf den Kragen 48 aufgeschraubt.

Der die auslaßseitige Kammer 20 mit der Membrankammer 40 verbindende Kanal 46 steht über eine stark gedrosselte Querbohrung 52 mit der einlaßseitigen Kammer 18 in Verbindung, so daß über diese Querbohrung 52 und den Kanal 46 die stark gedrosselte Verbindung zwischen einlaßseitiger Kammer 18 und Membrankammer 40 hergestellt ist. Dabei ist zwischen der Innenwandung der Längsbohrung 50 und dem Kragen 48 ein Ringspalt 54 gebildet. Der Ventilstößel 44 weist die in den Ringspalt 54 mündende Querbohrung 52 auf. Der Kragen 48 besitzt ebenfalls eine in dem Ringspalt 54 mündende Querbohrung 56. Der Ventilschließkörper 26 weist weiterhin einen in die auslaßseitige Kammer 20 ragenden, den Kanal 46 umgebenden Kragen 58 auf. Der Ventilschließkörper 26 trägt um diesen Kragen herum einen Dichtring 60 in Form eines O-Rings. Der Magnetanker 34 weist gleichachsig zu dem Ventilstößel 44 einen Zapfen 62 mit einer Sacklochbohrung 64 in der Stirnseite auf, der sich bei nicht-erregter Magnetspule 32 mit dem um die Sacklochbohrung 64 herum gebildeten Rand 66 unter dem Einfluß der Schließfeder 28 an den Dichtring 60 anlegt.

Die Wirkungsweise der beschriebenen Anordnung ist wie folgt:

In der dargestellten Schließstellung des Magnetventils ist die Magnetspule 32 stromlos. Der Magnetanker 34 mit dem Zapfen 62 wird von der Schließfeder 28 nach unten gedrückt. Die Schließfeder 28 stützt sich dabei an einem Federwiderlager 68 ab und drückt auf einen Ring 70, der an einem in den Zapfen 62 eingerasteten Sprengring anliegt. Der Rand 66 des Zapfens 62 liegt an dem Dichtring 60 an. Hierdurch wird das obere Ende des Kanals 46 abgeschlossen und damit die Verbindung zwischen der auslaßseitigen Kammer 20 und der Membrankammer 40 unterbrochen. Über die Querbohrung 52, den Ringspalt 54 und die Querbohrung 56 ist jedoch eine stark gedrosselte Verbindung zwischen der einlaßseitigen Kammer 18, in welcher der Vordruck herrscht, und dem Kanal 46 hergestellt, der über eine Querbohrung 72 mit der Membrankammer 40 verbunden ist. Über diese Verbindung baut sich in der Membrankammer 40 der Vordruck auf, der in der einlaßseitigen Kammer 18 herrscht. Dieser Vordruck wirkt auf die Membran 38 und drückt diese mit dem Ventilstößel 44 und der Belastungsfeder 42 nach unten. Der Ventilstößel 44 kann dabei teleskopartig auf dem Kragen 48 des Ventilschließkörpers 26 gleiten. Auf diese Weise ist der Ventilschließkörper 26 nur mit der Schließfeder 28 belastet. Die Schließfeder 28 kann nach Maßgabe der Schließkraft bemessen werden, die zu einem sicheren Abdichten erforderlich ist.

Wenn die Magnetwicklung 32 erregt wird, wird der Magnetanker 34 unter Zusammendrückung der Schließfeder 28 nach oben gezogen. Damit wird der Ventilschließkörper 26 von der über den Rand 66 ausgeübten Kraft der Schließfeder 28 entlastet. Gleichzeitig wird das obere Ende des Kanals 46 freigegeben und damit eine weniger gedrosselte Verbindung von der auslaßseitigen Kammer 20 zum Kanal 46 und der Membrankammer 40 freigegeben. Der in der Membrankammer 40 herrschende, relativ hohe Druck gleicht sich zu der auslaßseitigen Membrankammer 20 hin über den Kanal 46 aus. Die Belastungsfeder 42 drückt das Gas aus der Membrankammer 40 und öffnet das Ventil. Durch die Drosselwirkung des Kanals 46 erfolgt die Öffnungsbewegung in wünschenswerter Weise verzögert. Schließlich wird eine Stellung des Ventilschließkörpers 26 erreicht, bei welcher der Druck in der auslaßseitigen Kammer 20, der über Kanal 46 auf die Membran 38 wirkt, der Spannung der Belastungsfeder 42 die Waage hält. Das Gerät arbeitet jetzt als Gasdruckregler.

Sobald die Magnetspule 32 wieder stromlos wird, bewegt sich der Magnetanker 34 unter dem Einfluß der Schließfeder 28 nach unten, bis der Rand 66 auf dem Dichtring 60 aufsitzt. Hierdurch wird der Kanal 46 abgeschlossen. Über die Querbohrung 52, Ringspalt 54 und Bohrung 56 baut sich wieder der Vordruck in der Membrankammer 40 auf. Das Ventil geht in der beschriebenen Weise in die Schließstellung.

Mit 74 ist eine übliche Entlastungsmembran bezeichnet, die mit dem Ventilstößel 44 verbunden ist und auf die auf einer Seite der Vordruck und auf der anderen Seite der Druck aus der Membrankammer 40 wirkt. Hierdurch wird beim Regelbetrieb die Kraft kompensiert, die von der Druckdifferenz zwischen einlaßseitiger und auslaßseitiger Kammer 18 bzw. 20 auf den Ventilschließkörper

9

0058741

26 wirkt. 76 bezeichnet ein in der einlaßseitigen Kammer 18 angeordnetes Sieb.

<u>Patentansprüche</u>

1. Kombinationsventil, welches aus einem Druckregler und einem Magnetventil besteht, enthaltend

ein Ventilgehäuse (10) mit einem Einlaß (12) und einem Auslaß (14), das durch eine Trennwand (16) in eine einlaßseitige und eine auslaßseitige Kammer (18 bzw. 20) unterteilt ist, wobei in der Trennwand (16) ein Ventildurchgang (22) mit einem Ventilsitz (24) gebildet ist,

einen mit dem Ventilsitz (24) zusammenwirkenden Ventilschließkörper (26), der durch eine Schließfeder (28) in Schließrichtung belastet ist,

eine zu dem Ventilsitz (24) gleichachsige Magnetspule (30) und einen auf den Ventilschließkörper (26) einwirkenden Magnetanker (34),

ein Druckreglermeßwerk (36) mit einer mit dem Ventilschließkörper (26) verbundenen Reglermembran (38),

einer an die Reglermembran (38) angrenzenden Membrankammer (40), die mit der auslaßseitigen Kammer (20) in Verbindung steht, und einer in Öffnungsrichtung des Ventilschließkörpers (26) dem auf die Reglermembran (38) wirkenden Druck entgegenwirkenden Belastungsfeder (42),
dadurch gekennzeichnet, daß

(a) die Membrankammer (40) über eine stark gedrosselte Verbindung (52, 54, 56) mit der einlaßseitigen Kammer (18) in Verbindung steht und

(b) der Magnetanker (34) eine wesentlich weniger stark gedrosselte Verbindung (46) zwischen der austrittseitigen Kammer (20) und der Membrankammer (40) beherrscht, die bei nicht-erregter Magnetspule (32) abgesperrt und bei erregter Magnetspule (32) freigegeben ist.

2. Kombinationsventil nach Anspruch 1, dadurch gekennzeichnet, daß

(a) die Magnetspule (32) und das Druckreglermeßwerk (36) gleichachsig zueinander und zu dem Ventilsitz (24) auf gegenüberliegenden Seiten des Ventilgehäuses (10) angeordnet sind,

(b) der Ventilschließkörper (26) stromab von dem Ventilsitz (24) zwischen diesem und der Magnetspule (32) sitzt und über einen sich durch den Ventildurchgang (22) und die einlaßseitige Kammer (18) sowie die Membrankammer (40) erstreckenden Ventilstößel (44) mit der Reglermembran (38) verbunden ist,

(c) durch den Ventilschließkörper (26) und Ventilstößel (44) ein Kanal (46) verläuft, über den die weniger stark gedrosselte Verbindung zwischen austrittseitiger Kammer (20) und Membrankammer (40) hergestellt ist, und

(d) der Magnetanker (34 bei nicht-erregter Magnetspule (32) unter dem Einfluß der Schließfeder (28) kraftschlüssig und abdichtend an dem Ventilschließkörper (26) anliegt und dabei den Kanal (46) absperrt.

0058741

3. Kombinationsventil nach Anspruch 2, dadurch gekennzeichnet, daß

(a) der Ventilschließkörper (26) auf der dem Magnetanker (34) abgewandten Seite einen den Kanal (46) umgebenden Kragen (48) aufweist und

(b) der mit einer den Kanal (46) bildenden Längsbohrung (50) versehene Ventilstößel (44) mit dieser Längsbohrung (50) teleskopartig auf den Kragen (48) aufgeschoben ist.

4. Kombinationsventil nach einem der Ansprüche 2 oder 3, dadurch gekennzeichnet, daß der die auslaßseitige Kammer (20) mit der Membrankammer (40) verbindende Kanal (46) über eine stark gedrosselte Querbohrung (52, 56) mit der einlaßseitigen Kammer (18) in Verbindung steht, so daß über diese Querbohrung (52) und den Kanal (46) die stark gedrosselte Verbindung zwischen einlaßseitiger Kammer (18) und Membrankammer (40) hergestellt ist.

5. Kombinationsventil nach den Ansprüchen 2 bis 4, dadurch gekennzeichnet, daß

(a) zwischen der Innenwandung der Längsbohrung (50) des Ventilstößels (44) und dem Kragen (48) ein Ringspalt (54) gebildet ist,

(b) der Ventilstößel (44) eine in dem Ringspalt (54) mündende Querbohrung (52) aufweist und

(c) der Kragen (48) ebenfalls eine in dem Ringspalt (54) mündende Querbohrung (56) besitzt.

6. Kombinationsventil nach einem der Ansprüche 2 bis 5, dadurch gekennzeichnet, daß

(a) der Ventilschließkörper (26) einen in die auslaßseitige Kammer (20) ragenden, den Kanal (46) umgebenden Kragen (58) aufweist,

(b) der Ventilschließkörper (26) um diesen Kragen (58) herum einen Dichtring (60) trägt und

(c) der Magnetanker (34) gleichachsig zu dem Ventilstößel (44) einen Zapfen (62) mit einer Sacklochbohrung (64) in der Stirnseite aufweist, der sich bei nicht-erregter Magnetspule (32) mit dem um die Sacklochbohrung (64) herum gebildeten Rand (66) unter dem Einfluß der Schließfeder (28) an den Dichtring (60) anlegt.

0058741

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D,A | DE – A1 – 2 601 055 (P. GRÄBER)<br><br>* Seite 5, Zeile 13 – Seite 6, Zeile 28; Fig. 1 *<br><br>-- | 1,2 | G 05 D 16/20<br>F 16 K 31/06 |
| A | DE – A1 – 2 604 358 (PARKINSON COWAN APPLIANCES LTD)<br><br>* Fig. 1 *<br><br>-- | 1,2 | |
| D,A | US – A – 2 842 146 (E. SCHUSTER)<br><br>* Fig. 1 *<br><br>-- | 1,2 | |
| A | DE – B – 1 283 060 (DANFOSS A/S)<br><br>* Gesamt *<br><br>-- | | RECHERCHIERTE SACHGEBIETE (Int. Cl.³)<br><br>F 16 K 17/00<br>F 16 K 31/00<br>F 16 K 47/00<br>G 05 D 16/00 |
| A | DE – B – 1 167 611 (E. HERION)<br><br>* Gesamt *<br><br>---- | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 07-06-1982 | ROUSSARIAN |

EPA form 1503.1  06.78